# EUROPEAN PATENT APPLICATION

(11) **EP 2 500 386 A2**
(43) Date of publication of application: **19.09.2012**
(21) Application number: 12159447.7
(22) Date of filing: 14.03.2012
(51) Int. Cl.: C09D 11/00

(54) **Ink composition**

(30) Priority: 16.03.2011 JP 2011057956
(71) Applicant: Fujifilm Corporation, Minato-ku Tokyo 106-8620 (JP)
(72) Inventor: Matsushita, Yasuaki, Kanagawa, 258-8577 (JP)
(74) Representative: HOFFMANN EITLE

(57) **Abstract**

Provided is an ink composition which can maintain excellent discharge stability even at a higher printing speed, and is capable of providing an image having high image quality.

The ink composition includes a pigment (a), a water-soluble solvent (b), a surfactant (c), a compound represented by the following general formula (I) and/or a compound represented by the following general formula (II) (d), and water (e), wherein the content of the compound represented by the general formula (I) and/or the compound represented by the general formula (II) (d) in the ink composition is 0.15% by mass or less: 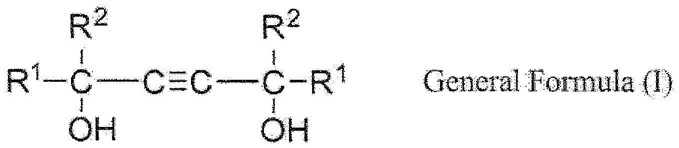 (in the general formula (I), R¹ and R² each independently represent a hydrogen atom, an aliphatic group, or an aromatic group); and 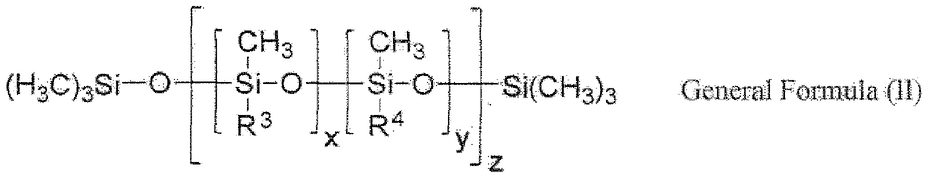 (in the general formula (II), R³ and R⁴ each independently represent a hydrogen atom, an aliphatic group, or an aromatic group, x+y equals 100, and z represents an integer of 5 or more).

## Description

### BACKGROUND OF THE INVENTION

1. Field of the Invention

The present invention relates to an ink composition used in an inkjet recording system, and an image forming method using the same.

2. Description of the Related Art

An inkjet recording system has many advantages, such as in that the system allows high-speed recording with less noise, makes the colorization easy, allows high resolution, and allows recording on a plain paper. Owing to these advantages, equipment and facilities that have utilized the recording system are remarkably widespread in use. In recent years, with advancement of inkjet recording technology, the inkjet recording system has also come to be used for the formation of high-resolution images which so far have been mainly formed by photography and off-set printing. In addition, the inkjet recording system has also come to be adopted for the use for printing a wide variety of prints in small quantities at high speed, at a low cost.

With the diversification of the range in which the inkjet recording system is applied, higher image quality and a higher printing speed have further been demanded. In order to achieve higher image quality, a variety of inks have been proposed. These inks can form a high-precision image with an ordinary printing speed, but the higher printing speed has caused a problem that the image quality is deteriorated. Accordingly, development of an ink capable of printing with the high-speed printing and forming an image having a high image quality has been demanded.

In order to increase the printing speed, attempts have been made, for example, to employ a single-path system for a printer, or increase the driving frequency of an inkjet head to enhance the ink discharging speed. However, the single-path system has a great effect on the image quality with poor discharge of one nozzle. Further, when the driving frequency of the inkjet head is increased, it becomes difficult, for example, to maintain the ink ejection speed or stabilize the ink meniscus in nozzles, and as a result, the continuous discharge stability of the ink becomes deteriorated. Therefore, actually by suppressing the driving frequency to some extent, good ink dischargeability is achieved. For example, in JP2006-282759A, improving the discharge stability of the ink by adding a specific surfactant has been proposed. However, the ink cannot sufficiently print with high-speed printing at a level that has been recently required, and cannot be evaluated as being satisfactory in view of image quality.

### SUMMARY OF THE INVENTION

An object of the present invention is to provide an ink composition for ink jetting, which has good discharge stability of the ink during high-speed printing and is capable of providing an image having high image quality. In addition, Another object of the present invention is to provide an image forming method using the ink composition.

The present inventors have made extensive studies in view of the above-described problems, and as a result, they have found that excellent discharge stability can be obtained even when the driving frequency of an inkjet head is increased to discharge the ink at a high speed, by incorporating a compound represented by the following general formula (I) and/or a compound represented by the following general formula (II) in specific amounts in the ink composition. The present invention has been completed on the basis on these findings.

The ink composition of the present invention that can solve the above-described problems is an ink composition including a pigment (a), a water-soluble solvent (b), a surfactant (c), a compound represented by the following general formula (I) and/or a compound represented by the following general formula (II) (d), and water (e), wherein the content of the compound represented by the general formula (I) and/or the compound represented by the general formula (II) (d) in the ink composition is 0.15% by mass or less.

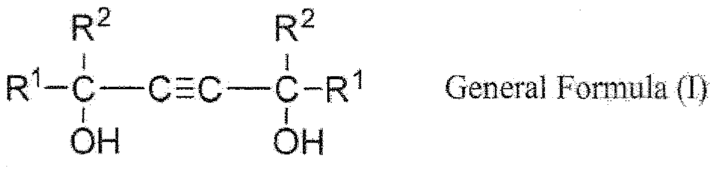

(in the general formula (I), R¹ and R² each independently represent a hydrogen atom, an aliphatic group, or an aromatic group).

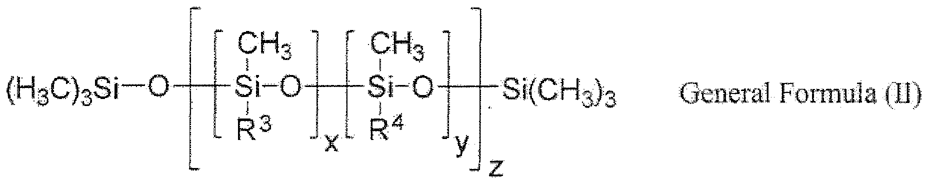

(in the general formula (II), R³ and R⁴ each independently represent a hydrogen atom, an aliphatic group, or an aromatic group, x+y equals 100, and z represents an integer of 5 or more).

In a preferable embodiment of the present invention, the mass ratio (W_{c}/W_{d}) of the mass (W_{c}) of the surfactant (c) to the mass (total mass: W_{d}) of the compound represented by the general formula (I) and/or the compound represented by the general formula (II) (d) in the ink composition is 5 or more and 200 or less.

In another preferable embodiment of the ink composition of the present invention, the ink composition includes the compound represented by the general formula (I); the pigment (a) is a polymer-coated pigment obtained by dispersing the pigment using a water-soluble dispersant and then crosslinking the dispersed pigment with a crosslinking agent; the water-soluble solvent (b) includes a water-soluble solvent having an SP value of 27.5 or less in an amount of 65% by mass or more; and the content of the water-soluble solvent (b) with respect to the ink composition is more than 30% by mass and 55% by mass or less.

The present invention further encompasses an ink set including the ink composition, and a colorless ink composition including an aggregation promoting agent that promotes the aggregation of the ink composition and a water-soluble solvent.

In addition, the present invention encompasses an image forming method using the ink composition.

In a preferable embodiment of the image forming method of the present invention, the ink composition is ejected by ink jetting to apply the ink composition to a recording medium; the ink composition is discharged using an inkjet head having a driving frequency of 35 kHz or more; the recording medium is non-processed paper; a colorless ink composition including an aggregation promoting agent that promotes the aggregation of the ink composition and a water-soluble solvent is further used; and the image forming method includes a first step in which the colorless ink composition is applied to the recording medium, and a second step in which the ink composition is applied to the recording medium to which the colorless ink composition has been applied.

With the ink composition of the present invention, good discharge stability can be obtained even with a higher printing speed. Further, the image forming method using the ink composition of the present invention has an excellent effect of forming an image with high image quality, which has good identity of the character, or the like even when printing is carried out at a high speed.

### DESCRIPTION OF THE PREFERRED EMBODIMENTS

[Ink Composition]

The ink composition of the present invention includes a pigment (a), a water-soluble solvent (b), a surfactant (c), a compound represented by the general formula (I) and/or a compound represented by the general formula (II) (d), and water (e). The ink composition of the present invention is preferably used in an inkjet recording system.

Pigment (a)

The ink composition of the present invention includes a pigment as a coloring material. The pigment used is not particularly limited, and it can be appropriately selected depending on the purpose from ordinarily used pigments and may be any one of an organic pigment and an inorganic pigment.

Examples of the organic pigment include an azo pigment, a polycyclic pigment, a dye chelate, a nitro pigment, a nitroso pigment, and aniline black. Among these, an azo pigment, a polycyclic pigment, and the like are more preferred. Examples of the azo pigment include an azo lake, an insoluble azo pigment, a condensed azo pigment, and a chelate azo pigment. Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment. Examples of the dye chelate include a basic dye chelate and an acidic dye chelate.

Examples of the inorganic pigment include titanium oxide, iron oxide, calcium carbonate, barium sulfate, aluminum hydroxide, barium yellow, cadmium red, chrome yellow, and carbon black. Among these, carbon black is particularly preferred. In addition, examples of carbon black include those prepared by a known method such as a contact method, a furnace method, and a thermal method.

The organic pigments that can be used in the present invention are exemplified below by colors.

Specific examples of the carbon black as a black type pigment include Raven 7000, Raven 5750, Raven 5250, Raven 5000 ULTRA II, Raven 3500, Raven 2000, Raven 1500, Raven 1250, Raven 1200, Raven 1190 ULTRA II, Raven 1170, Raven 1255, Raven 1080, Raven 1060, and Raven 700 (all manufactured by Colombian Carbon Corp.), Regal 400R, Regal 330R, Regal 660R, Mogul L, Black Pearls L, Monarch 700, Monarch 800, Monarch 880, Monarch 900, Monarch 1000, Monarch 1100, Monarch 1300, and Monarch 1400 (all manufactured by Cabot Corp.), Color Black FW1, Color Black FW2, Color Black FW2V, Color Black 18, Color Black FW200, Color Black S150, Color Black S160, Color Black S170, Printex 35, Printex U, Printex V, Printex 140U, Printex 140V, Special Black 6, Special Black 5, Special Black 4A, and Special Black 4 (all manufactured by Degussa), and No. 25, No. 33, No. 40, No. 45, No. 47, No. 52, No. 900, No. 2200B, No. 2300, MCF-88, MA600, MA7, MA8, and MA100 (all manufactured by Mitsubishi Chemical Corp.), but are not limited thereto.

Example of the pigment of the yellow ink include C. I. Pigment Yellow 1, 2, 3, 4, 5, 6, 7, 10, 11, 12, 13, 14, 14 C, 16, 17, 24, 34, 35, 37, 42, 53, 55, 65, 73, 74, 75, 81, 83, 93, 95, 97, 98, 100, 101, 104, 108, 109, 110, 114, 117, 120, 128, 129, 138, 150, 151, 153, 154, 155, and 180.

Examples of the pigment of the magenta ink include C. I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 48 (Ca), 48 (Mn), 48:2, 48:3, 48:4, 49, 49:1, 50, 51, 52, 52:2, 53:1, 53, 55, 57 (Ca), 57:1, 60, 60:1, 63:1, 63:2, 64, 64:1, 81, 83, 87, 88, 89, 90, 101 (Bengal), 104, 105, 106, 108 (cadmium red), 112, 114, 122 (quinacridone magenta), 123, 146, 149, 163, 166, 168, 170, 172, 177, 178, 179, 184, 185, 190, 193, 202, 209, 219, and 269, and C. I. Pigment Violet 19, and C. I. Pigment Red 122 is particularly preferred.

Examples of the pigment of the cyan ink include C. I. Pigment Blue 1, 2, 3, 15, 15:1, 15:2, 15:3, 15:34, 16, 17:1, 22, 25, 56, and 60, C. I. Vat Blue 4, 60, and 63, and C. I. Pigment Blue 15:3 is particularly preferred.

These pigments may be used alone, or plural kinds in each group or plural kinds selected from each group may be used in combination thereof.

The content of the pigment in the ink composition of the present invention is not particularly limited, but is preferably 0.5% by mass or more and 10% by mass or less, more preferably 1% by mass or more and 8% by mass or less, and particularly preferably 2% by mass or more and 7% by mass or less, with respect to the total mass of the ink composition.

The pigment used in the ink composition of the present invention is preferably a polymer-coated pigment obtained by dispersing the pigment using a water-soluble dispersant and then crosslinking the dispersed pigment with a crosslinking agent (which may also be referred to as a "water-dispersible pigment").

Examples of the water-soluble dispersant used to prepare the pigment include polyvinyls, polyurethanes, and polyesters, and among these, polyvinyls are preferable.

The water-soluble dispersant preferably has a group that crosslinks by a crosslinking agent in the molecule. The crosslinking group is not particularly limited, and examples thereof include a carboxyl group or a salt thereof, an isocyanate group, and an epoxy group. Among these, the water-soluble dispersant preferably has a carboxyl group or a salt thereof from the viewpoint of improvement of dispersibility. The water-soluble dispersant can be synthesized using a carboxyl group-containing monomer as a copolymerization component. Examples of the carboxyl group-containing monomer include methacrylic acid, b-carboxyethyl acrylate, fumaric acid, itaconic acid, maleic acid, and crotonic acid. Among these, methacrylic acid and b-carboxyethyl acrylate are preferred from the viewpoints of crosslinkability and dispersion stability.

In addition, a hydrophilic monomer or a hydrophobic monomer can also be used as a copolymerization component. The hydrophilic monomer may be ionic or nonionic. The hydrophobic monomer is not particularly limited, but an alkyl methacrylate having 1 to 20 carbon atoms or an alkyl acrylate having 1 to 20 carbon atoms is preferred.

The polymer used as a water-soluble dispersant may be a random polymer or a block or graft polymer. The method for synthesizing the polymer is not particularly limited, but random polymerization of vinyl monomers or the like is preferable in view of dispersion stability.

The acid value of the water-soluble dispersant (the amount in mg of KOH required to neutralize 1 g of a water-soluble dispersant) is preferably from 135 to 250 mgKOH/g, more preferably from 135 to 200 mgKOH/g, and particularly preferably from 135 to 180 mgKOH/g, from the viewpoints of dispersibility and dispersion stability of the pigment.

The amount of the water-soluble dispersant used is preferably from 10 parts by mass to 200 parts by mass, more preferably from 20 parts by mass to 150 parts by mass, and particularly preferably from 30 parts by mass to 100 parts by mass, with respect to 100 parts by mass of the pigment.

The crosslinking agent is not particularly limited as long as it is a compound having two or more sites that react with the water-soluble dispersant. Among these, a compound having 2 or more epoxy groups (a bifunctional or higher epoxy compound) is preferred in view of excellent reactivity with a carboxyl group.

Specific examples thereof include ethylene glycol diglycidyl ether, polyethylene glycol diglycidyl ether, 1,6-hexanediol glycidyl ether, diethylene glycol diglycidyl ether, polyethylene glycol diglycidyl ether, dipropylene glycol diglycidyl ether, and polypropylene glycol diglycidyl ether, and polyethylene glycol diglycidyl ether and diethylene glycol diglycidyl ether are preferred.

The molar ratio of the crosslinking site of the crosslinking agent to the crosslinked site of the dispersant is preferably from 1:1.1 to 1:10, more preferably from 1:1.1 to 1:5, and particularly preferably from 1:1.1 to 1:3, from the viewpoints of the speed of a crosslinking reaction and the stability of dispersion after crosslinking.

The method for preparing a water-dispersible pigment is not particularly limited as long as a polymer-coated pigment can be obtained through a step in which the pigment is dispersed using a water-soluble dispersant, and then crosslinked by a crosslinking agent. Hereinbelow, an example of the method for preparing the water-dispersible pigment is shown, but the present invention is not limited thereto.

(i) Pigment-Dispersing Step

The pigment and the water-soluble dispersant are dispersed in water or an aqueous solution in a polar solvent to obtain a pigment dispersion.

(ii) Crosslinking Reaction Step

The crosslinking agent is added to the dispersion obtained in (i), followed by heating, to obtain a polymer-coated pigment (water-dispersible pigment).

(iii) Pigment-Purifying Step

The water-dispersible pigment after crosslinking obtained in (ii) is purified.

In the steps of (i) to (iii) above, other ordinary steps may be appropriately added, if necessary. As the solar solvent or the like used in the step, ordinary ones may be used.

Water-Soluble Solvent (b)

The ink composition of the present invention includes a water-soluble solvent. The water-soluble solvent used in the present invention is preferably a water-soluble organic solvent. The ink composition of the present invention is particularly preferably used in the inkjet recording system, but the ink dried in the ink spraying port of nozzles in the recording system causes clogging. Accordingly, it is preferable to use a water-soluble organic solvent having a lower vapor pressure than that of water so as to enhance the wettability.

The water-soluble solvent (b) used in the ink composition preferably includes a water-soluble solvent having an SP value of 27.5 or less in an amount of 65% by mass or more. The SP value in the present invention means a solubility parameter (Solubility Parameter) of a solvent, and is a value expressed as a square root of the molecular aggregation energy. The SP value can be calculated by the method described in R. F. Fedors, Polymer Engineering & Science, 14, p. 147 (1967). As the SP value of the water-soluble solvent used in the present invention, a value calculated by this method is employed.

The water-soluble solvent having an SP value of 27.5 or less that is used in the ink composition is not particularly limited, but the SP value is preferably from 20 to 27, and more preferably from 23 to 26.7, from the viewpoints of satisfactory storage stability, discharge stability, and image quality of the ink.

Specific examples of the water-soluble solvent having an SP value of 27.5 or less are shown below, together with the SP values, but the present invention is not limited thereto. Further, in the present specification, EO and PO represent an ethyleneoxy group and a propyleneoxy group, respectively:
Heptaoxypropylene glycol (SP value 21.2, for example, PP-400 (trade name, manufactured by Sanyo Chemical Industries, Ltd.),
Pentaoxyethylene pentaoxypropylenebutyl ether (SP value 18.8, for example, 5E7HB-100 (trade name, manufactured by Sanyo Chemical Industries, Ltd.),
Decaoxyethylene heptaoxypropylenebutyl ether (SP value 18.8, for example, 50HB-260 (trade name, manufactured by Sanyo Chemical Industries, Ltd.),
Dodecaoxyethylene dodecaoxypropylenebutyl ether (SP value 18.8, for example, 50HB-400 (trade name, manufactured by Sanyo Chemical Industries, Ltd.),
Decaoxyethylene triacontaoxypropylenebutyl ether (SP value 18.7, for example, PE-62 (trade name, manufactured by Sanyo Chemical Industries, Ltd.), and
Pentacosaoxyethylene triacontaoxypropylenebutyl ether (SP value 18.8, for example, PE-64 (trade name, manufactured by Sanyo Chemical Industries, Ltd.);
Diethylene glycol monoethyl ether (DEGmEE) (SP value 22.4),
Diethylene glycol monobutyl ether (DEGmBE) (SP value 21.5),
Diethylene glycol diethyl ether (DEGdEE) (SP value 16.8),
Triethylene glycol monobutyl ether (TEGmBE) (SP value 21.1),
Propylene glycol monoethyl ether (PGmEE) (SP value 22.3),
Dipropylene glycol (DPG) (SP value 27.1),
Dipropylene glycol monomethyl ether (DPGmME) (SP value 21.3),
Tripropylene glycol (TPG) (SP value 24.7, for example, PP-200 (trade name, manufactured by Sanyo Chemical Industries, Ltd.),
1,2-Hexanediol (SP value 27.4),
Trioxypropylene glyceryl ether (SP value 26.4, for example, GP-250 (trade name, manufactured by Sanyo Chemical Industries, Ltd.), and
Dioxyethylene dioxypropylenebutyl ether (SP value 20.1, for example, 50HB-55 (trade name, manufactured by Sanyo Chemical Industries, Ltd.);
POP (4) diglyceryl ether (SP value 26.1, for example, SC-P400 (trade name, manufactured by Sakamoto Yakuhin Kogyo Co., Ltd.),
POP (9) diglyceryl ether (SP value 22.7, for example, SC-P750 (trade name, manufactured by Sakamoto Yakuhin Kogyo Co., Ltd.),
POE (20) diglyceryl ether (SP value 22.4, for example, SC-E1000 (trade name, manufactured by Sakamoto Yakuhin Kogyo Co., Ltd.), and
POE (40) diglyceryl ether (SP value 21.0, for example, SC-E2000 (trade name, manufactured by Sakamoto Yakuhin Kogyo Co., Ltd.);
nC₄H₉O(AO)₄-H (AO=EO or PO, and the ratio is EO:PO=1:1) (SP value: 20.1)
nC₄H₉O(AO)₁₀-H (AO=EO or PO, and the ratio is EO:PO=1:1) (SP value: 18.8)
HO(A'O)₄₀-H (A'O=EO or PO, and the ratio is EO:PO=1:3) (SP value: 18.7)
HO(A"O)₅₅-H (A"C)=EO or PO, and the ratio is EO:PO-5:6) (SP value: 18.8)
HO(PO)₃-H (SP value: 24.7)
HO(PO)₇-H (SP value: 21.2)

The water-soluble solvent having an SP value of 27.5 or less in the present invention is more preferably a compound represented by the following general formula (1) or (2), and even more preferably a compound represented by the following general formula (1).

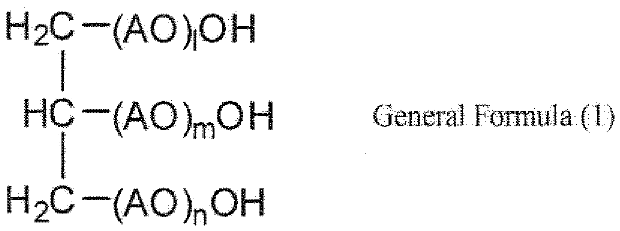

In the general formula (1), 1, m, and n each independently represent an integer of 1 or more, and 1+m+n equals 3 to 15. 1+m+n is preferably from 3 to 12, and more preferably from 3 to 10.

AO represents an ethyleneoxy group or a propyleneoxy group, and plural AO's may be the same as or different from each other. AO is preferably a propyleneoxy group.

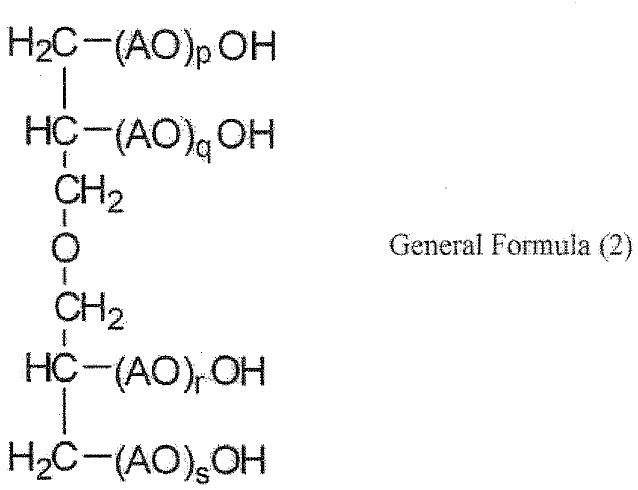

In the general formula (2), p, q, r, and s each independently represent an integer of 1 or more, and p+q+r+s equals 4 to 40. p+q+r+s is preferably from 4 to 20, more preferably from 4 to 16, and particularly preferably from 4 to 12,

AO has the same definition as in the general formula (1), and is preferably a propyleneoxy group.

Specific examples of the compound represented by the general formula (1) are shown below, together with the SP values (in parentheses). However, the present invention is not limited thereto.

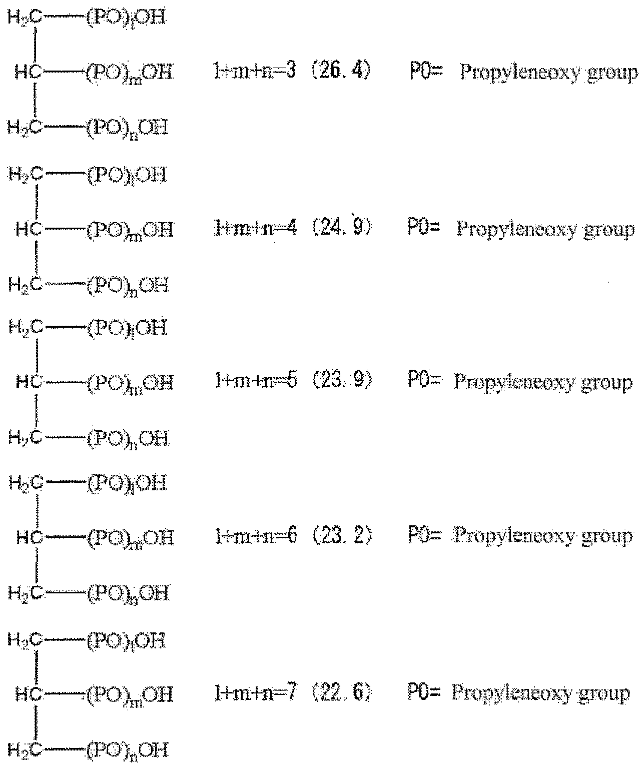

Specific examples of the compound of the general formula (2) include the following compounds, but the present invention is not limited thereto:
SC-E450 (trade name, manufactured by Sakamoto Yakuhin Kogyo Co., Ltd., SP value 26.6, p+q+r+s=6, AO=ethyleneoxy group),
SC-P400 (trade name, manufactured by Sakamoto Yakuhin Kogyo Co., Ltd., SP value 26.1, p+q+r+s=4, AO=propyleneoxy group),
SC-E750 (trade name, manufactured by Sakamoto Yakuhin Kogyo Co., Ltd., SP value 23.7, p+q+r+s=13, AO=ethyleneoxy group),
SC-P750 (trade name, manufactured by Sakamoto Yakuhin Kogyo Co., Ltd., SP value 22.7, p+q+r+s=9, AO=propyleneoxy group),
SC-E1000 (trade name, manufactured by Sakamoto Yakuhin Kogyo Co., Ltd., SP value 22.4, p+q+r+s=20, AO=ethyleneoxy group),
SC-E1500 (trade name, manufactured by Sakamoto Yakuhin Kogyo Co., Ltd., SP value 21.5, p+q+r+s=30, AO=ethyleneoxy group),
SC-P1000 (trade name, manufactured by Sakamoto Yakuhin Kogyo Co., Ltd., SP value 21.3, p+q+r+s=14, AO=propyleneoxy group),
SC-E2000 (trade name, manufactured by Sakamoto Yakuhin Kogyo Co., Ltd., SP value 21.3, p+q+r+s=40, AO=ethyleneoxy group),
Unilube DGP-700 (trade name, manufactured by Nof Corporation, SP value 22.7, p+q+r+s=9, AO=propyleneoxy group), and
Unilube DGP-950 (trade name, manufactured by Nof Corporation, SP value 21.3, p+q+r+s=14, AO=propyleneoxy group)

In the ink composition of the present invention, these water-soluble solvents having an SP value of 27.5 or less may be used singly or in combination of two or more kinds thereof.

In the water-soluble solvent (b), the compound represented by the general formula (1) is included in an amount of preferably 10% by mass or more, more preferably 30% by mass or more, and even more preferably 50% by mass or more. Further, the compound represented by the general formula (2) is included in an amount of preferably 10% by mass or more, more preferably 30% by mass or more, and even more preferably 50% by mass or more.

In the water-soluble solvent (b) of the present invention, other water-soluble solvents may be used in combination with the water-soluble solvent having an SP value of 27.5 or less. Such other solvents are preferably used in a range in which the proportion of the solvent having an SP value of 27.5 or less in the water-soluble solvent (b) is not less than 65% by mass. As the water-soluble solvent that can be used in combination herein, a water-soluble organic solvent is preferable.

Specific examples of the water-soluble organic solvent that can be used in combination include:
alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; saccharides such as glucose, mannose, fructose, ribose, xylose, arabinose, galactose, aldonic acid, glucitol, maltose, cellobiose, lactose, sucrose, trehalose, and maltotriose; sugar alcohols; hyaluronic acids; so-called solid humectants such as ureas; alkyl alcohols having 1 to 4 carbon atoms, such as ethanol, methanol, butanol, propanol, and isopropanol;
glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone; 1,3-dimethyl-2-imidazolidinone, formamide, acetamide, dimethyl sulfoxide, sorbitol, sorbitan, acetin, diacetin, triacetin, and sulfolane. These may be used singly or in combination of two or more kinds thereof.

From the viewpoints of antidrying or wettability, polyhydric alcohols are useful, and examples thereof include glycerin, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, and 1,2,6-hexanetriol. These may be used singly or in a combination of two or more kinds thereof.

From the viewpoints of enhancing the penetrating properties of the ink composition into the recording medium, polyol compounds are preferable, and examples thereof include aliphatic diols such as 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol, Among these, preferable examples include 2-ethyl-1,3-hexanediol and 2,2,4-trimethyl-1,3-pentanediol.

The content of the water-soluble solvent (b) in the ink composition is preferably more than 30% by mass and 55% by mass or less, more preferably 33% by mass or more and 50% by mass or less, and even more preferably 35% by mass or more and 40% by mass or less, with respect to the total mass of the ink composition.

Surfactant (c)

The ink composition of the present invention includes a surfactant. As the surfactant, a compound having a structure in which both of a hydrophilic moiety and a hydrophobic moiety are included in a molecule can be effectively used. Any of an anionic surfactant, a cationic surfactant, an amphoteric surfactant, and a nonionic surfactant can be used.

Specific examples of the anionic surfactant include sodium dodecylbenzene sulfonate, sodium lauryl sulfate, sodium alkyl diphenyl ether disulfonate, sodium alkylnaphthalene sulfonate, sodium dialkyl sulfosuccinate, sodium stearate, potassium oleate, sodium dioctylsulfosuccinate, sodium polyoxyethylene alkyl ether sulfate, sodium polyoxyethylene alkylphenyl ether sulfate, sodium dialkylsulfosuccinate, sodium stearate, sodium oleate, and sodium t-octylphenoxyethoxypolyethoxyethyl sulfate, and these may be used singly or in combination of two or more kinds thereof.

Specific examples of the nonionic surfactant include acetylene diol derivatives such as an ethylene oxide adduct of acetylene diol, polyoxyethylenelauryl ether, polyoxyethyleneoctylphenyl ether, polyoxyethyleneoleylphenyl ether, polyoxyethylenenonylphenyl ether, an oxyethylene-oxypropylene block copolymer, t-octylphenoxyethyl polyethoxyethanol, and nonylphenoxyethyl polyethoxyethanol, and these may be used singly or in a combination of two or more kinds thereof.

Specific examples of the cationic surfactant include a tetraalkyl ammonium salt, an alkylamine salt, a benzalkonium salt, an alkylpyridinium salt, and an imidazolium salt. Specific examples include dihydroxyethyl stearylamine, 2-heptadecenyl hydroxyethyl imidazoline, lauryldimethyl benzyl ammonium chloride, cetylpyridinium chloride, and stearamide methylpyridium chloride.

Among these surfactants, in view of stability, a nonionic surfactant is preferable, and an acetylene diol derivative is more preferable.

The amount of the surfactant in the ink composition is not particularly limited, but is preferably 0.1% by mass or more, more preferably 0.5 to 10% by mass, and even preferably from 1 to 3% by mass, with respect to the total mass of the ink composition.

Compound Represented by General Formula (I) or (II) (d)

The ink composition of the present invention includes a compound represented by the following general formula (I) and/or a compound represented by the following general formula (II) (d).

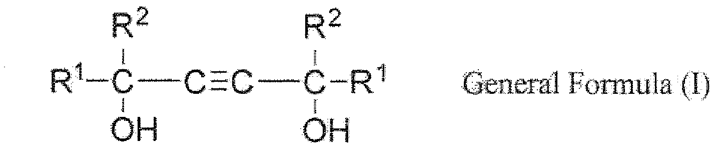

In the general formula (I), R¹ and R² each independently represent a hydrogen atom, an aliphatic group, or an aromatic group.

Examples of the aliphatic group of R¹ and R² include a linear, branched, or cyclic alkyl group, a linear, branched, or cyclic alkenyl group, a halogenated alkyl group, -(R¹¹)n-OH an acryloyl group, and a (meth)acryloyl group. R¹¹ represents an epoxy group or an alkyleneoxy group, and n represents an integer of 2 to 20:

The alkyl group is preferably an alkyl group having 1 to 12 carbon atoms, and specific examples thereof include a methyl group, an ethyl group, an isopropyl group, a t-butyl group, a hexyl group, and a dodecyl group.

The halogenated alkyl group is preferably a halogenated alkyl group having 2 to 12 carbon atoms, and examples of the alkyl group moiety include the alkyl groups as described above. Further, preferable examples of the halogenated species include fluorine and chlorine.

The alkenyl group is preferably an alkenyl group having 1 to 12 carbon atoms, and specific examples thereof include a vinyl group, a propenyl group, and a butenyl group.

The alkyleneoxy group of R¹¹ is preferably an alkyleneoxy group having 2 to 3 carbon atoms, and specific examples thereof include an ethyleneoxy group and a propyleneoxy group.

Examples of the aromatic group of R¹ and R² include an aryl group, an aromatic heterocyclic group, and a fused ring thereof.

The aryl group is preferably an aryl group having 6 to 12 carbon atoms, and specific examples thereof include a phenyl group and a naphthyl group.

The aromatic heterocyclic group is preferably an aromatic heterocyclic group having 5 to 12 carbon atoms, and specific examples of the heterocycle include an imidazoline ring, a pyrazole ring, an oxazoline ring, a pyridine ring, a pyrimidine ring, and a triazine ring.

R¹ and R² may be further substituted. Examples of the substituent include the above-described alkyl groups, alkenyl groups, halogenated alkyl groups, acryloyl groups, (meth)acryloyl groups, epoxy groups, aryl groups, and aromatic heterocyclic groups.

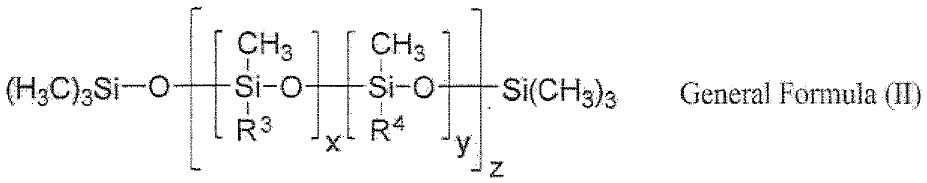

In the general formula (II), R³ and R⁴ each independently represent a hydrogen atom, an aliphatic group, or an aromatic group, x+y equals 100, and z represents an integer of 5 or more.

Examples of the aliphatic group of R³ and R⁴ include a linear, branched, or cyclic alkyl group, a linear, branched, or cyclic alkenyl group, a halogenated alkyl group, -(R¹¹)n-OH, an acryloyl group, and a (meth)acryloyl group. R¹¹ represents an epoxy group or an alkyleneoxy group, and n represents an integer of 2 to 20.

The alkyl group is preferably an alkyl group having 1 to 12 carbon atoms, and specific examples thereof include a methyl group, an ethyl group, an isopropyl group, a t-butyl group, a hexyl group, and a dodecyl group.

The halogenated alkyl group is preferably a halogenated alkyl group having 2 to 12 carbon atoms, and examples of the alkyl group moiety include the alkyl groups as described above. Further, preferable examples of the halogenated species include fluorine and chlorine.

The alkenyl group is preferably an alkenyl group having 1 to 12 carbon atoms, and specific examples thereof include a vinyl group, a propenyl group, and a butenyl group.

The alkyleneoxy group of R¹¹ is preferably an alkyleneoxy group having 2 to 3 carbon atoms, and specific examples thereof include an ethyleneoxy group and a propyleneoxy group.

Examples of the aromatic group of R³ and R⁴ include an aryl group, an aromatic heterocyclic group, and a fused ring thereof.

The aryl group is preferably an aryl group having 6 to 12 carbon atoms, and specific examples thereof include a phenyl group and a naphthyl group.

The aromatic heterocyclic group is preferably an aromatic heterocyclic group having 5 to 12 carbon atoms, and specific examples of the heterocycle include an imidazoline ring, a pyrazole ring, an oxazoline ring, a pyridine ring, a pyrimidine ring, and a triazine ring.

R³ and R⁴ may be further substituted. Examples of the substituent include the above-described alkyl groups, alkenyl groups, halogenated alkyl groups, acryloyl groups, (meth)acryloyl groups, epoxy groups, aryl groups, and aromatic heterocyclic groups.

z is preferably an integer of 10 or more, and more preferably an integer of 20 or more.

Specific examples of the compounds represented by the general formulae (I) and (II) are shown below, but the present invention is not limited thereto.

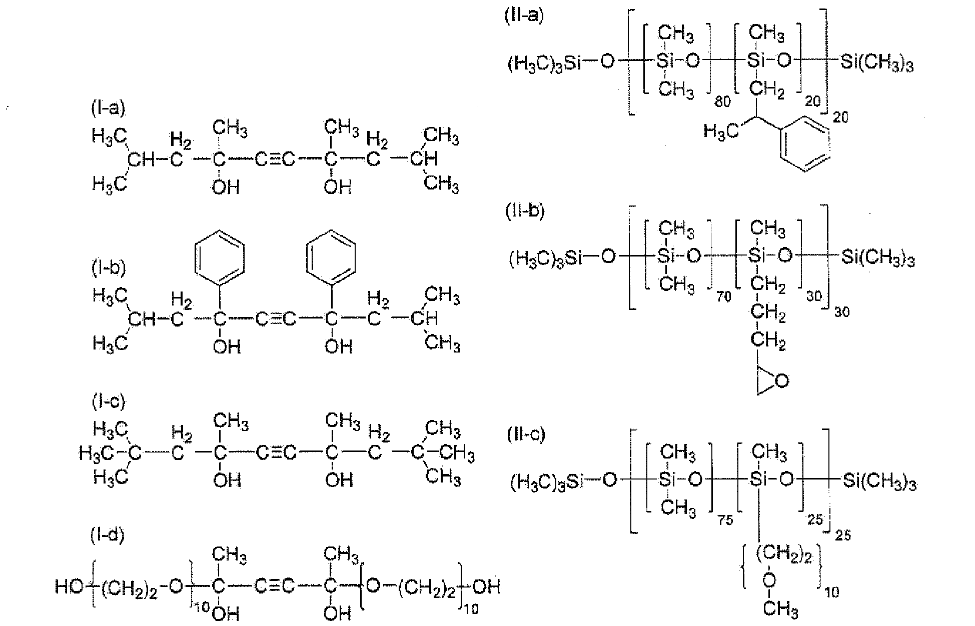

Examples of the compound represented by the general formula (I) include OLFINE SPC, OLFINE AF-103, OLFINE AF-104, OLFINE AK-02, OLFINE SK-14 (all manufactured by Nissin Chemical Industry Co., Ltd.), and SURFYNOL DF-110 D, SURFYNOL DF-37, SURFYNOL DF-58, SURFYNOL DF-75, SURFYNOL DF-210, SURFYNOL MD-20, and EnviroGem AD01 (all manufactured by Air Products and Chemicals Inc.).

Examples of the compound represented by the general formula (II) include BYK-017, BYK-018, BYK-019, BYK-020, BYK-021, BYK-022, BYK-023, BYK-024, BYK-025, BYK-028, BYK-038, BYK-044, BYK-080 A, BYK-093, BYK-094, BYK-1610, BYK-1615, BYK-1650, BYK-1660, BYK-1730, and BYK-1770 (all manufactured by BYK Chemie), and 8590 ADDITIVE, SH200, SC5540 COMPOUND, DK Q1-071, DK Q1-1247, FS 1265, FS ANTIFOAM 92, FS ANTIFOAM 1277, and FS ANTIFOAM 013A (all manufactured by Dow Coming Corporation).

The ink composition of the present invention preferably includes the compound represented by the general formula (I).

The content of the compound represented by the general formula (I) and/or the compound represented by the general formula (II) in the ink composition is 0.15% by mass or less, preferably more than 0% by mass, more preferably 0.005% by mass or more and 0.1% by mass or less, and even more preferably 0.01% by mass or more and 0.05% by mass or less, with respect to the total mass of the ink composition.

In addition, in order to improve the discharge stability, the amount of the compound represented by the general formula (I) and/or the compound represented by the general formula (II) included in the ink composition is preferably far less than the content of the surfactant (c). Specifically, the mass ratio (W_{c}/W_{d}) of the mass (W_{c}) of the surfactant (c) to the mass (W_{d}) of the compound represented by the general formula (I) or (II) (d) included in the ink composition is 5 or more and 200 or less, more preferably 10 or more and 150 or less, and even more preferably 33 or more and 100 or less.

Water (e)

The ink composition of the present invention is an aqueous ink containing water, but the amount of water not particularly limited. In particular, the content of water is preferably 30% by mass or more and less than 70% by mass, more preferably 50% by mass or more and 65% by mass or less, and even more preferably 53% by mass or more and 60% by mass or less, with respect to the total mass of the ink composition.

(Other Components)

The ink composition of the present embodiment may include various additives, in addition to the components (a) to (e). Examples of other additives include known additives such as an ultraviolet absorber, an antifading agent, a mildew-proofing agent, a pH adjusting agent, an antirust agent, an antioxidant, an emulsion stabilizer, an antiseptic agent, a defoaming agent, a viscosity adjusting agent, a dispersion stabilizer, and a chelating agent, and these may be appropriately selected from ordinarily used ones and used.

Examples of the ultraviolet absorber include a benzophenone-based ultraviolet absorber, a benzotriazole-based ultraviolet absorber, a salicylate-based ultraviolet absorber, a cyanoacrylate-based ultraviolet absorber, and a nickel complex-based salt ultraviolet absorber.

As the antifading agents, various organic antifading agents and metal complex antifading agents can be used. Examples of the organic antifading agents include hydroquinones, alkoxyphenols, dialkoxyphenols, phenols, anilines, amines, indanes, chromanes, alkoxyanilines, and heterocycles. Examples of the metal complex antifading agents include a nickel complex and a zinc complex.

Examples of the mildew-proofing agent include sodium dehydroacetate, sodium benzoate, sodium pyridinethione-1-oxide, ethyl p-hydroxybenzoate, 1,2-benzisothiazolin-3-one, sodium sorbate, and sodium pentachlorophenol. The mildew-proofing agent is preferably used in the amount of 0.02% by mass to 1.00% by mass in the ink.

The pH adjusting agent is not particularly limited as long as the pH adjusting agent can adjust a pH value to a desired value without exerting an adverse influence on an ink for recording to which the pH adjusting agent is added, and may be selected appropriately according to the purpose. Examples of the pH adjusting agent include alcohol amines (for example, diethanlolamine, triethanolamine, and 2-amino-2-ethyl-1,3-propanediol), alkali metal hydroxides (for example, lithium hydroxide, sodium hydroxide, and potassium hydroxide), ammonium hydroxides (for example, ammonium hydroxide and quaternary ammonium hydroxide), phosphonium hydroxide, and alkali metal carbonates.

Examples of the antirust agent include acid sulfite, sodium thiosulfate, ammonium thiodiglycolate, diisopropyl ammonium nitrite, pentaerythritol tetranitrate, and dicyclohexyl ammonium nitrite.

Examples of the antioxidant include phenolic antioxidants (including hindered phenol antioxidants), amine antioxidants, sulfur antioxidants, and phosphorus antioxidants.

Examples of the chelating agent include sodium ethylenediamine tetraacetate, sodium nitrilotriacetate, sodium hydroxyethyl ethylenediamine triacetate, sodium diethylenetriamine pentaacetate, and sodium uramil diacetate.

[Ink Set]

The ink composition of the present invention can also be used in an ink set, in combination with a colorless ink composition including an aggregation promoting agent that promotes the aggregation of the ink composition and a water-soluble solvent. The ink set can be employed in ordinary writing tools, recording instruments, pen plotters, or the like, and can be suitably used, in particular, for an inkjet recording system.

[Colorless Ink Composition]

The colorless ink composition used in the ink set of the present invention preferably includes an aggregation promoting agent that promotes the aggregation of the ink composition and a water-soluble solvent.

(Aggregation Promoting Agent)

In the aggregation promoting agent in the colorless ink composition, an acid is preferably used. The acid may be any of an inorganic acid and an organic acid. Specific examples of the acid include polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumarinic acid, thiophenecarboxylic acid, nicotinic acid, or derivatives of these compounds, or salts thereof, and one kind or two or more kinds selected therefrom is preferably used.

The content of the aggregation promoting agent in the colorless ink composition is not particularly limited, but from the viewpoints of the control of the aggregation speed, or the like, it is preferably from 0.1% by mass to 30% by mass, more preferably from 0.5% by mass to 20% by mass, and even more preferably from 1% by mass to 15% by mass, with respect to the total mass of the colorless ink composition.

(Water-Soluble Solvent)

The water-soluble solvent in the colorless ink composition is preferably a water-soluble organic solvent. Specifically, the water-soluble solvent may be appropriately selected from those exemplified as the water-soluble solvent (b) in the ink composition, and used. Among them, water-soluble organic solvents having a relatively high SP value (of preferably 27.5 or more) as defined above, such as glycerin, propylene glycol, and diethylene glycol, are preferable.

The content of the water-soluble solvent in the colorless ink composition is not particularly limited, but it is preferably 10% by mass or more and 70% by mass or less, more preferably 20% by mass or more and 60% by mass or less, and particularly preferably 30% by mass or more and 50% by mass or less, with respect to the total mass of the colorless ink composition.

(Surfactant)

The colorless ink composition used in the ink set of the present invention preferably includes a surfactant. Examples of the surfactant include those as exemplified as the surfactant (c) in the ink composition. Among them, in order to enhance the aggregation promoting effect, a nonionic surfactant is preferable, and an acetylene diol derivative is more preferable.

The content of the surfactant in the colorless ink composition is not particularly limited, but it is preferably 0.02% by mass or more, more preferably from 0.1 to 3% by mass, and even more preferably from 0.3 to 2% by mass, with respect to the total mass of the colorless ink composition.

(Other Components)

A preferable example of the colorless ink composition used in the present invention may be a colorless ink composition that generates an aggregate by changing the pH of the ink composition. At this time, the pH of the colorless ink composition is preferably from 1 to 6, and more preferably from 2 to 5, and even more preferably from 3 to 5. The pH can be adjusted using the above-described acid or other known pH adjusting agents.

Moreover, in order to improve the printing properties, it is preferable to add a polyvalent metal salt or a polyallylamine to a polyvalent metal salt or a polyallylamine colorless ink composition.

Examples of the polyvalent metal salt include salts of an alkaline earth metal of Group 2A of the periodic table (for example, magnesium and calcium); a transition metal of Group 3B of the periodic table (for example, lanthanum); a cation of Group 3A of the periodic table (for example, aluminum); lanthanides (for example, neodymium); polyallylamine, and polyallylamine derivatives. Preferable examples thereof include calcium and magnesium.

Examples of the anion that is preferably employed as a counter salt of calcium or magnesium include a carboxylate (formic acid, acetic acid, benzoic acid salt, and the like), nitrate, chloride, and thiocyanate thereof.

The amount of the polyvalent metal salt added to the colorless ink composition is preferably from about 1 to about 10% by mass, more preferably from about 1.5 to about 7% by mass, and even more preferably from about 2 to about 6% by mass.

[Physical Properties of Ink Composition]

The surface tension of the ink composition in the case where the ink composition is used in the inkjet recording method is preferably 20 mN/m or more and 40 mN/m or less, more preferably from 28 mN or more and 38 mN/m or less, and even more preferably from 32 mN/m or more and 37 mN/m or less, in view of discharge stability.

The viscosity at 25°C of the ink composition is preferably 3 mPa·s or more and 10 mPa·s or less, more preferably 4 mPa·s or more and less than 8.5 mPa·s, and even more preferably 5 mPa·s or more and less than 7.5 mPa·s.

[Image Forming Method]

In the image forming method of the present invention, image formation is carried out by the ink composition of the present invention. The image formation is preferably carried out by an inkjet recording system in which the ink composition is ejected by ink jetting to be applied on a recording medium.

The method for ejecting by ink jetting is carried out by applying energy to the ink composition to discharge the ink from the inkjet head, and applying the ink liquid droplets to a recording medium. Specifically, reference may be made to the method as described in paragraphs 0093 to 0105 of JP2003-306623A, which may also be preferably used in the present invention.

The inkjet recording system used in the image forming method of the present invention is not particularly limited, but use may be made of any of known systems, for example, a charge control system including discharging an ink using an electrostatic inducing force, a drop-on-demand system (a pressure pulse system) using the vibration pressure of a piezoelectric element, a sonic inkjet system including discharging an ink by using radioactive ray pressure caused when the electric signal is converted into a sonic beam and radiated to the ink, and a thermal inkjet system including forming air bubbles by heating an ink and using the pressure generated therefrom. Among these, the piezoelectric system is preferably used, which easily controls the amount of the ink discharged and is available in a wide range of inks.

Particularly, in the image forming method of the present invention, the ink composition is preferably discharged using an inkjet head of a driving frequency having 35 kHz or more. As described above, when the driving frequency of the inkjet head is increased, an increased printing speed can be accomplished, but there has been a problem that the discharge stability of the ink is deteriorated. When the ink composition of the present invention is used, good discharge stability of the ink is maintained even at a high driving frequency, for example, at 35 kHz or more, whereby a high-precision image can be formed.

In the image forming method of the present invention, the above-described colorless ink composition can be preferably used in combination with the ink composition. The image forming method using the colorless ink composition includes a first step in which the colorless ink composition is applied to a recording medium, and a second step in which the ink composition is applied to the recording medium on which the colorless ink composition has been applied. By applying the colorless ink composition to the recording medium in advance, the fixability of the ink composition to be applied later is improved.

Furthermore, in addition to the two steps, ordinarily conducted steps, such as a drying step and a fixing step, may also be added according to the purposes.

As a method for applying the colorless ink composition to a recording medium, a method of ejection by ink jetting and a method of application using a coating apparatus are preferable.

The method of ejection by ink jetting can be carried in the same manner as the method of ejecting the ink composition by ink jetting.

The method of application using a coating apparatus is carried out by applying the colorless ink composition to the recording medium using an ordinarily used coating apparatus. Examples of the coating apparatus include coating machines such as a slit coater, a spinner, a whirler, a roller coater, a curtain coater, a knife coater, a wire bar coater, and an extruder.

[Recording Medium]

The recording medium (image-receiving material), with which the ink composition of the present invention can be used, is not particularly limited as long as it has the absorbability and retention properties of the ink to be printed. As the recording medium, ordinary printing paper, for example, coated paper obtained by subjecting the surface of original paper such as coat paper, art paper, and photographic paper to a treatment such as coating, various types of exclusive paper provided with a functional layer such as an ink receiving layer on original paper or coated paper, non-processed paper such as plain paper, high-quality paper, and recycled paper, can be used.

Among them, as the recording medium, non-processed paper such as plain paper, high-quality paper, and recycled paper is preferably used. The ink composition of the present invention is suitable for high-speed printing, and also in the applications in which small amounts of various printed materials are printed at a high speed and low cost. In these applications, in view of cost, there are many cases where non-processed paper such as high-quality paper, plain paper, and recycled paper, which is neither subjected to a coating treatment on the surface nor provided with a functional layer, is used rather than off-set paper such as photographic paper provided with an image-receiving layer, art paper, and coat paper, as a recording medium. With the ink composition of the present invention, when high-speed printing is carried out on non-processed paper such as plain paper, an image having high image quality can be obtained, and the drying properties are excellent, and as a result, the ink is not easily transferred.

[Examples]

Hereinbelow, the present invention will be described in detail with reference to Examples, but the present invention is not limited to these Examples. Further, unless otherwise specified, the "parts" and "%" are based on mass.

Reference Examples

1. Preparation of Water-Soluble Resin Dispersant P-1

A mixed liquid of methyl methacrylate (478 parts)/methacrylic acid (172 parts)/2-ethylhexyl methacrylate (350 parts)/2,2'-azobis(2-methylbutyronitrile) (22.05 parts) was added dropwise over 2 hours under a nitrogen atmosphere to isopropanol (187.5 parts) warmed to 80°C. After completion of the dropwise addition, the mixed liquid was kept at 80°C for an additional 4 hours, and then cooled to 25°C. The solvent was removed under reduced pressure to obtain a water-soluble resin dispersant P-1 (water-soluble dispersant) having a weight average molecular weight of about 30000 and an acid value of 154 mgKOH/g.

2. Preparation of Pigment Dispersion

The water-soluble resin dispersant P-1 (150 parts) was dissolved in water, and then an aqueous water-soluble resin dispersant solution having a pH after neutralization adjusted to 10.1 using an aqueous potassium hydroxide solution and a concentration of the water-soluble resin dispersant of 30.6% was prepared. Into 147 parts of the aqueous water-soluble resin dispersant solution were mixed 90 parts of Pigment Blue 15:3 (Phthalocyanine Blue A220. manufactured by Dainichiseika Color & Chemicals Mfg. Co., Ltd.) and 362 parts of water, and the mixture was dispersed for 3 hours using a bead mill (0.1 mmφ zirconia beads) to obtain a dispersion N1 of uncrosslinked pigment-containing resin particles having a concentration of the pigment of 15%.

Polyethylene glycol diglycidyl ether (0.35 parts) was added to 70 parts of the dispersion N1 of uncrosslinked pigment-containing resin particles, and the mixture was reacted at 50°C for 6 and a half hours, and then cooled to 25°C to obtain a dispersion (aqueous pigment dispersion) of crosslinked pigment-containing resin particles having a concentration of the pigment of 15%.

Examples

1. Preparation of Ink Composition

(1) Ink Composition A1

The aqueous pigment dispersion as obtained above and the following components were mixed in the following composition, and then filtered through a 5-μm membrane filter to prepare an ink composition A1.

(Composition of Ink Composition A1)

| | |
|---|---|
| Aqueous Pigment Dispersion | 20% by mass |
| Propylene Glycol (SP value: 32.6) | 10% by mass |
| SC-E450 (manufactured by Sakamoto Yakuhin Kogyo Co., Ltd.: ethylene glycol-modified diglycerin) (SP value: 26.6) | 22% by mass |
| OLFINE E1010 (manufactured by Nisshin Chemical Industry Co., Ltd.) | 1.5% by mass |
| OLFINE AF-103 | 0.05% by mass |
| Ion exchange water | Balance |

(2) Ink Compositions A2 to A6

In the same manner as for the ink composition A1 except that the compositions were changed as shown in Table 1, the ink compositions A2 to A6 were prepared.

(3) Comparative Ink Compositions B1 to B4

In the same manner as for the ink composition A1 except that the compositions were changed as shown in Table 1, comparative ink compositions B 1 to B4 were prepared.

**[Table 1] Ink Compositions**

| | | A1 | A2 | A3 | A4 | A5 | A6 | B1 | B2 | B3 | B4 |
|---|---|---|---|---|---|---|---|---|---|---|---|
| Pigment (a) | Aqueous pigment dispersion | 20 | 20 | 26.7 | 26.7 | 30 | 30 | 20 | 26.7 | 26.7 | 26.7 |
| Water soluble solvent (b) Those in parentheses refer to SP values. | Glycerin (33.5) | - | - | - | - | - | - | - | - | - | 30 |
| | Propylene glycol (32.6) | 10 | - | - | 12 | - | - | 10 | - | - | 10 |
| | Diethylene glycol (30.6) | - | 12 | - | - | - | 8 | - | 12 | - | |
| | Dipropylene glycol (27.1) | - | - | 8 | - | - | - | - | - | 8 | |
| | Hexylene glycol (26.8) | - | - | - | - | 7 | - | - | - | - | |
| | SC-E450 (26.6) | 22 | - | - | - | - | - | 22 | - | - | |
| | SANNIX GP-250 (26.4) | - | 16 | - | - | 28 | 10 | - | 16 | - | |
| | SC-P400 (26.1) | - | - | 25 | - | - | 14 | - | - | 25 | |
| | 2-Pyrrolidone (25.9) | - | 8 | - | 6 | - | - | - | 8 | - | |
| | SC-P750 (22.7) | - | - | - | 20 | - | - | - | - | - | |
| Surfactant (c) | OLFINE E 1010 | 1.5 | - | 1 | - | 3 | - | 1.5 | - | 1 | 1.5 |
| | SURFYNOL 485 | - | 1.5 | - | 1 | - | 3 | - | 1.5 | - | |
| Compound of general formula (I) or (II) (d) | OLFINE AF-103 | 0.05 | - | 0.1 | - | 0.13 | - | 0.25 | - | 1 | |
| | BYK-094 | - | 0.02 | - | 0.03 | - | 0.1 | - | 0.25 | - | 0.03 |
| Water (e) | Ion exchange water | Balance | Balance | Balance | Balance | Balance | Balance | Balance | Balance | Balance | Balance |
| W_{c}/W_{d} | | 30 | 75 | 10 | 33 | 23 | 30 | 6 | 6 | 1 | 50 |
| Proportion of solvent having an Sp value of 27.5 or less in total amount of solvent (% by mass) | | 68.8 | 66.7 | 100 | 68.4 | 100 | 75 | 68.8 | 66.7 | 100 | 0 |
| Amount (% by mass) of water-soluble solvent (b) added to ink composition | | 32 | 36 | 33 | 38 | 35 | 32 | 32 | 36 | 33 | 40 |

| | | | | | | | | | | | |
|---|---|---|---|---|---|---|---|---|---|---|---|
| *Numbers in Table represent % by mass. | | | | | | | | | | | |

2. Preparation of Colorless Ink Compositions

(1) Colorless Ink Composition C1

The components in the following composition were mixed to prepare a colorless ink composition C1:

| (Composition of Colorless Ink Composition C1) | |
|---|---|
| Citric acid | 4% by mass |
| Glycerin | 12% by mass |
| Propylene glycol | 6% by mass |
| OLFINE E1010 (manufactured by Nisshin Chemical Industry Co., Ltd.) | 1% by mass |
| Trisodium citrate | 10% by mass |
| Ion exchange water | Balance |

(2) Colorless Ink Composition C2

In the same manner as for the colorless ink composition C1 except that the compositions were changed as shown in Table 2, a colorless ink composition C2 was prepared.

**[Table 2] Colorless Ink Composition**

| | | C1 | C2 |
|---|---|---|---|
| Aggregation promoting agent | Citric acid | 4 | - |
| | Malic acid | - | 4 |
| Water-soluble solvent | Glycerin | 12 | - |
| | Propylene glycol | 6 | 12 |
| | Diethylene glycol | - | 6 |
| | SC-E450 | - | 2 |
| pH adjusting agent | Trisodium citrate | 10 | 12 |
| Surfactant | OLFINE E1010 | 1 | 1 |
| Water | Ink exchange water | Balance | Balance |

| | | | |
|---|---|---|---|
| *Numbers in Table represent % by mass. | | | |

Details of the solvents and the surfactants shown in Tables 1 and 2 are as follows:
SC-E450: Ethylene glycol-modified diglycerin with p+q+r+s=6 and AO=ethyleneoxy group in the general formula (2), manufactured by Sakamoto Yakuhin Kogyo Co., Ltd.
SANNIX GP-250: Propylene glycol-modified glycerin with 1+m+n=3 and AO=propyleneoxy group in the general formula (1), manufactured by Sanyo Chemical Industries, Ltd.
SC-P400: Propylene glycol-modified diglycerin with p+q+r+s=4 and AO=propyleneoxy group in the general formula (2), manufactured by Sakamoto Yakuhin Kogyo Co., Ltd.
SC-P750: Propylene glycol-modified diglycerin with p+q+r+s=9 and AO=propyleneoxy group in the general formula (2), manufactured by Sakamoto Yakuhin Kogyo Co., Ltd.
OLFINE E1010: Ethylene oxide adduct of acetylene diol (10 moles), manufactured by Nissin Chemical Industry Co., Ltd.
SURFYNOL 485: Ethylene oxide adduct of acetylene alcohol, manufactured by Air Products and Chemicals Inc.
OLFINE AF-103: Compound represented by the general formula (I) (amount of effective components: 92%), manufactured by Nissin Chemical Industry Co., Ltd.
BYK-094: Compound represented by the general formula (II), manufactured by BYK Chemise

3. Image Formation

Using the ink compositions and colorless ink compositions prepared above, images were formed on the following recording media in the order as shown in the following image forming methods 1 to 3.

[Image Forming Method 1]

The ink compositions A1 to B4 were ejected on recording media using a Dimatix Material Printer DMP-3000 manufactured by Fuji Film Dimatix Inc. (as a cartridge, using a cartridge formed by modifying a 10 pl discharge cartridge (DMC-11610) so as to allow liquid supply from the outside, and also, by modifying the cartridge to adjust the waveform so as to allow to perform ejecting with a drive frequency of 40 kHz) to form images.

[Image Forming Method 2]

The colorless ink composition was ejected at 5 g/m² on a recording medium using a Dimatix Material Printer DMP-3000. After one minute, the ink composition was ejected on the recording medium on which the colorless ink composition had been ejected, using a Dimatix Material Printer DMP-3000 manufactured by Fuji Film Dimatix Inc. (as a cartridge, using a cartridge formed by modifying a 10 pl discharge cartridge (DMC-11610) so as to allow liquid supply from the outside, and also, by modifying the cartridge to adjust the waveform so as to allow to perform ejecting with a drive frequency of 40 kHz) to form an image.

[Image Forming Method 3]

The colorless ink composition was bar-coated at 5 g/m² to a recording medium. After one minute, the ink composition was ejected on the recording medium on which the colorless ink composition had been coated, using a Dimatix Material Printer DMP-3000 manufactured by Fuji Film Dimatix Inc. (as a cartridge, using a cartridge formed by modifying a 10 pl discharge cartridge (DMC-11610) so as to allow liquid supply from the outside, and also, by modifying the cartridge to adjust the waveform so as to allow to perform ejecting with a drive frequency of 40 kHz) to form an image.

[Recording Media Used]

Npi Form NEXT-IJ <70>: manufactured by Nippon Paper Group, Inc. (basis amount: 81,4-1,+5 g/m²)
Npi Form <55>; manufactured by Nippon Paper Group, Inc. (basis amount: 64-1, +5 g/m²)

4. Evaluation

Each of the images as formed above was evaluated according to the following items. The results are shown in Table 3.

<Continuous Discharge Stability>

Images were formed under the above-described conditions and evaluated on their discharge stability in accordance with the following criteria. The image unevenness was observed with the naked eye.

(1) The discharge rate after a continuous discharge test over 60 minutes was 90% or more.

(2) The discharge rate after a continuous discharge test over 1. minute and then a pause over 30 minutes was 90% or more.

(3) Image unevenness was not observed.

- Evaluation Criteria -
A: Case where the results passed in all of three items
B: Case where the results passed in two items
C: Case where the results did not pass in two or more items
Further, evaluation as B or higher is desired for usual use.

<Measurement of Optical Density (OD)>

Under the above-described conditions, a solid image having a printed dot percentage of 100% was formed at a resolution of 1200 dpi, and the optical density of the image was measured using an X-Rite 530 on the upper side of the paper.

- Evaluation Criteria -
A: Case where OD is 0.8 or more
B: Case where OD is 0.6 or more and less than 0.8
C: Case where OD is less than 0.6

<Measurement of Backside Optical Density>

Under the above-described conditions, a solid image having a printed dot percentage of 100% was formed at a resolution of 1200 dpi, and the optical density of the image was measured using an X-Rite 530 on the backside of the paper.

- Evaluation Criteria -
A: Case where OD is 0.15 or less
B: Case where OD is more than 0.15 and 0.2 or less
C: Case where OD is more than 0.2

<Character Readability>

A 4-pt character, " 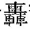 " (Japanese Kanji), was printed, evaluated as "readable" and "unreadable" by the naked eye of ten examiners, and then classified as follows.

- Evaluation Criteria -
A: Case where 9 to 10 persons in 10 persons evaluated the character as being "readable"
B: Case where 6 to 8 persons in 10 persons evaluated the character as being "readable"
C: Case where 5 or more persons in 10 persons evaluated the character as being "unreadable"

<Drying Properties of Printed Material>

Under the above-described conditions, a solid image having a printed dot percentage of 100% was formed at a resolution of 1200 dpi, left to stand for 1 minute, and adhered onto the same recording medium for evaluation, a load of 500 g/cm² was applied thereto for 1 minute, and the transfer of the coloring material to the recording medium adhered was observed with the naked eye.

- Evaluation Criteria -
A: Case where no transfer of the coloring material was observed
B: Case where slight transfer (less than 5% of the entire area) of the coloring material was observed
C: Case where transfer (5% or more of the entire area) of the coloring material was observed

**[Table 3]**

| | Ink composition | Colorless ink composition | Image forming method | Continuous discharge stability | Optical density (OD) | Backside optical density | Character readability | Drying properties of printed material |
|---|---|---|---|---|---|---|---|---|
| Ex. 1 | A1 | - | 1 | A | B | B | B | A |
| Ex. 2 | A2 | - | 1 | A | B | B | B | A |
| Ex. 3 | A3 | - | 1 | A | B | B | B | A |
| Ex. 4 | A4 | - | 1 | A | B | B | B | A |
| Ex. 5 | A5 | - | 1 | A | A | B | B | A |
| Ex. 6 | A6 | - | 1 | A | A | B | B | A |
| Ex. 7 | A1 | C1 | 2 | A | A | A | A | A |
| Ex. 8 | A2 | C1 | 3 | A | A | A | A | A |
| Ex. 9 | A3 | C2 | 2 | A | A | A | A | A |
| Ex. 10 | A5 | C2 | 3 | A | A | A | A | A |
| Comp. Ex. 1 | B1 | - | 1 | C | B | B | C | A |
| Comp. Ex. 2 | B2 | - | 1 | C | B | B | B | A |
| Comp. Ex. 3 | B3 | - | 1 | C | B | C | C | A |
| Comp. Ex. 4 | B4 | - | 1 | B | C | C | C | A |
| Comp. Ex. 5 | B1 | C1 | 2 | C | A | B | A | A |
| Comp₋ Ex. 6 | B4 | C1 | 2 | C | A | A | B | B |

As seen clearly from Table 3, all of Examples 1 to 6, in which the ink compositions A1 to A6 were used alone, showed excellent continuous discharge stability during high-speed printing. Further, even when the image quality of the formed image, such as the optical density, the backside optical density, the character readability, and the drying properties of the printed material, was evaluated, good results could be obtained. In addition, in Examples 7 to 10 in which the ink compositions A1 to A6 were used in combination with the colorless ink compositions C1 or C2, increased high-image quality could be accomplished, in addition to excellent continuous discharge stability.

On the contrary, in all of Comparative Examples 1 to 6 in which the comparative ink compositions B 1 to B4 were used, the continuous discharge stability was poor. Further, even with the evaluation of the image quality of the image, undesirable results were obtained in plural items. In addition, the comparative ink compositions could not satisfy both of the discharge stability and the high-image quality, even when used in combination with the colorless ink composition.

## Claims

1. An ink composition comprising a pigment (a), a water-soluble solvent (b), a surfactant (c), a compound represented by the following general formula (I) and/or a compound represented by the following general formula (II) (d), and water (e), wherein the content of the compound represented by the general formula (I) and/or the compound represented by the general formula (II) (d) in the ink composition is 0.15% by mass or less: 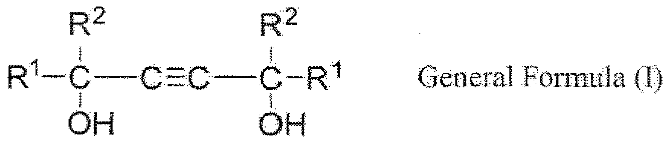 in the general formula (I), R¹ and R² each independently represent a hydrogen atom,
an aliphatic group, or an aromatic group; and 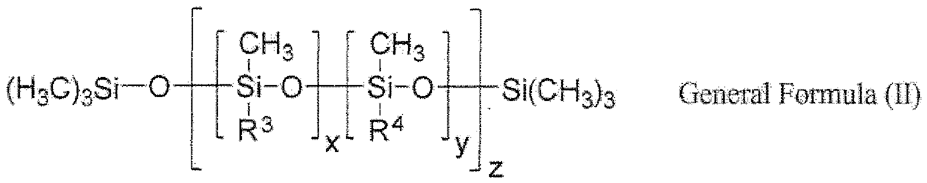 in the general formula (II), R³ and R⁴ each independently represent a hydrogen atom, an aliphatic group, or an aromatic group, x+y equals 100, and z represents an integer of 5 or more.

2. The ink composition according to claim 1, wherein the mass ratio (W_{c}/W_{d}) of the mass (W_{c}) of the surfactant (c) to the mass (W_{d}) of the compound represented by the general formula (I) and/or the compound represented by the general formula (II) (d) in the ink composition is 5 or more and 200 or less.

3. The ink composition according to claim 1 or 2, comprising a compound represented by the general formula (I).

4. The ink composition according to any one of claims 1 to 3, wherein the pigment (a) is a polymer-coated pigment, obtained by dispersing the pigment using a water-soluble dispersant and then crosslinking the dispersed pigment with a crosslinking agent.

5. The ink composition according to any one of claims 1 to 4, wherein the water-soluble solvent (b) includes water-soluble solvent having an SP value of 27.5 or less in an amount of 65% by mass or more.

6. The ink composition according to any one of claims 1 to 5, wherein the content of the water-soluble solvent (b) with respect to the ink composition is more than 30% by mass and 55% by mass or less.

7. An ink set comprising:
the ink composition according to any one of claims 1 to 6; and
a colorless ink composition including an aggregation promoting agent that promotes the aggregation of the ink composition and a water-soluble solvent.

8. An image forming method using the ink composition according to any one of claims 1 to 6.

9. The image forming method according to claim 8, wherein the ink composition is ejected by ink jetting to apply the ink composition to a recording medium.

10. The image forming method according to claim 8 or 9, wherein the ink composition is discharged using an inkjet head of a driving frequency having 35 kHz or more.

11. The image forming method according to any one of claims 8 to 10, wherein the recording medium is non-processed paper.

12. The image forming method according to any one of claims 8 to 11, wherein a colorless ink composition including an aggregation promoting agent that promotes the aggregation of the ink composition and a water-soluble solvent is further used.

13. The image forming method according to claim 12, comprising a first step in which the colorless ink composition is applied to the recording medium, and a second step in which the ink composition is applied to the recording medium to which the colorless ink composition has been applied.
